# EUROPÄISCHE PATENTSCHRIFT

(11) **EP 2 192 056 B1**
(45) Veröffentlichungstag und Bekanntmachung des Hinweises auf die Patenterteilung: **27.02.2013**
(21) Anmeldenummer: 09014787.7
(22) Anmeldetag: 27.11.2009
(51) Int. Cl.: B65G 1/02

(54) **Anfahrschutz von Regalstützen**
Crash protection guard for shelf struts
Protection contre les chocs de protège-étagères

(30) Priorität: 01.12.2008 DE 202008015856 U; 18.11.2009 DE 202009015616 U
(43) Veröffentlichungstag der Anmeldung: 02.06.2010
(73) Patentinhaber: Fritz Schäfer GmbH, 57290 Neunkirchen (DE)
(72) Erfinder: Senff, Udo, 57234 Wilnsdorf (DE)
(74) Vertreter: Grosse, Wolf-Dietrich Rüdiger

(56) Entgegenhaltungen:
- WO-A1-2005/049453
- US-A1- 2007 221 596

## Beschreibung

Die Erfindung betrifft einen Anfahrschutz für Eck- bzw. Regalstützen von Regalanlagen, umfassend bodenseitig angeordnete, die Regalstützen umschließende, U-förmige Außenprofile.

Solche Regalanlagen sind Bestandteil eines Warenlagers und werden von pfostenartigen Stützen getragen. Da die Warenlager bzw. Regalanlagen zum Ein- und Auslagern von Waren von Staplerfahrzeugen befahren werden, ist es bei dem rauhen Betrieb notwendig, die Regalstützen im Bodenbereich gegen ein Anfahren durch die Staplerfahrzeuge zu schützen.

Dazu sind im Stand der Technik beispielsweise U-förmige Außenprofile bekannt, die um den Fußbereich der Regalstützen herumgelegt werden und die Regalstützen von drei Seiten umschließen. Das U-Profil wird hierbei mit vier Schrauben und vier Dübeln im Untergrund bzw. Fundament verankert. Nachteil dieser Befestigungsart ist, dass das U-Profil bei einer Beschädigung mit hoher Krafteinwirkung - Anfahren durch ein beladenes Staplerfahrzeug - im Bereich seiner beiden vorderen Verankerungen aus dem Boden herausgerissen werden kann bzw. im Bereich seiner Stegfläche stark deformiert wird. Bei einer weiteren Beschädigung im deformierten Bereich ist es dann unumgänglich, dass die Regalstütze in Mitleidenschaft gezogen wird und daraufhin umgehend ausgetauscht werden muss, um einen Einsturz der Regalanlage zu verhindern.

Aus der WO 2005/049453 A1 ist ein gattungsgemäßen Anfahrschutz für Eck- bzw. Regalstützen von Regalanlagen, umfassend bodenseitig angeordnete, die Regalstützen umschließende, U-förmige Außenprofile bekannt, wobei dem Außenprofil an seiner Innenseite ein der Regalstütze vorgelagertes, vertikales Profil zugeordnet ist.

Weiterhin ist im Stand der Technik ein Anfahrschutz für Eckstützen von Regalanlagen bekannt. Dieser besteht aus einem Doppel T-Profil, das im Untergrund vor der Eck- bzw. Regalstütze einbetoniert wird. Vorteil dieser Schutzvariante ist, dass sie durch die formschlüssige Verbindung mit dem Boden/Untergrund hohen Kräften standhalten kann. Allerdings ist bei dieser Schutzvariante die Regalstütze im bodennahen Seitenbereich nicht vor Beschädigungen geschützt. Die Einbetonierung des Doppel-T-Profils bereitet beim Austausch große Schwierigkeiten.

Der Erfindung liegt daher die Aufgabe zugrunde, einen gattungsgemäßen Anfahrschutz zu schaffen, der auch starke Anfahrstöße von den Regalstützen fernhält und sich gleichwohl leicht austauschen lässt.

Diese Aufgabe wird erfindungsgemäß dadurch gelöst, dass dem Außenprofil an seiner Innenseite ein der Regalstütze vorgelagertes, vertikales Profil zugeordnet ist. Das vertikale Profil, z.B. ein Rohrprofil, ein Doppel-T-Träger oder dergleichen, wird vorzugsweise mit dem Steg des U-förmigen Außenprofils verschweißt. Durch das zwischen der Regalstütze und dem Außenprofil angeordnete vertikale Profil erfährt das Außenprofil im Bereich seiner Stirnfläche, die am häufigsten von Beschädigungen durch beispielsweise Staplerfahrzeuge betroffen ist, eine gezielte Verstärkung, so dass selbst starke Anfahrstöße von der zu schützenden Regalstütze ferngehalten werden. Weiterhin werden aber gleichzeitig auch die Seitenbereiche des Außenprofils von innen her zumindest über einen Teilbereich, der von den Abmessungen des vertikalen Profils abhängig ist, und auf jeden Fall in den Eckübergängen von der Stirnseite des Außenprofils zu dessen Flanschen zusätzlich gestützt.

Die Erfindung sicht vor, das das vertikale Profil zumindest nach unten hin gegenüber dem Außenprofil verlängert ist. Bei einem sowohl nach oben als auch nach unten verlängerten, vertikalen Profil wird durch das obere Verlängerungsende, das parallel zur Längsachse der Regalstütze verläuft, die Regalstütze außerdem in vertikaler Richtung oberhalb des Außenprofils wirkungsvoll gegen Beschädigungen geschützt. Hingegen ermöglicht das untere Verlängerungsende des vertikalen Profils nach einer bevorzugten Ausführung der Erfindung ein einfaches Einstecken in eine im Boden bzw. Untergrund einbetonierte Hülse. Hierdurch wird einerseits das Außenprofil mit dem von diesem eingekammerten vertikalen Profil auf dem der Regalstütze vorgelagerten Bodenbereich festgelegt. Andererseits ist ein einfacher Austausch möglich.

Gemäß einer Ausgestaltung der Erfindung ist das Außenprofil an den Innenseiten seiner Flanschenden mit einander zugewandten, jeweils eine Bohrung aufweisenden Verankerungsplatten ausgebildet. Damit lässt sich das den Bodenbereich der Regalstütze einkammernde Außenprofil an dem von dem vorgelagerten vertikalen Profil entfernten, hinteren Ende in einfacher Weise mit lediglich zwei Schrauben im Untergrund über Dübel verankern. Bei einem Austausch einer Regalstütze brauchen somit vorteilhaft lediglich zwei Verankerungsschrauben gelöst zu werden, anstatt wie bisher bei den Anfahrschutz-U-Profilen üblich vier Verankerungsschrauben, um die Regalstütze frei zugänglich zu machen. Diese einstückige, massive Einheit aus im Boden verankertem Außenprofil und in der Hülse in dem Boden angeordneten, vertikalen Profil kann hohen Krafteinwirkungen standhalten und somit eine Beschädigung der Regalstützen weitestgehend verhindern.

Nach einer bevorzugten Ausführung der Erfindung wird ein Außenprofil vorgeschlagen, bei dem der Steg von der Regalstütze weg nach vorne spitzwinklig zuläuft und angrenzend zum Scheitelpunkt des Winkels beidseitig tangential an dem der Regalstütze vorgelagerten, vertikalen Profil abgestützt ist. Das vertikale Profil verläuft auch hier parallel zur Regalstütze und ist vorzugsweise mit den Winkelstegen des Außenprofils verschweißt. Durch die Kombination eines solchermaßen spitzwinkligen Außenprofils mit dem vertikalen Profil wird der Bereich der Anprall- bzw. Aufprallspitze gezielt verstärkt, so dass das den Bodenbereich der Regalstütze einhausende Außenprofil die bei einem direkten Auf- bzw. Anprall auftretende hohe Energie problemlos aufnehmen kann, ohne dabei unnötig stark deformiert zu werden.

Eine bevorzugte Ausgestaltung der Erfindung sieht vor, dass das vertikale Profil insgesamt ein Rundstahl ist, das bzw. der nach unten hin gegenüber dem Außenprofil verlängert ist und ebenfalls wiederum in eine im Untergrund eingebetonierte Hülse einsteckbar ist. Damit wird auch hier vorteilhaft erreicht, dass selbst bei einem Austausch eines beschädigten Außenprofils lediglich zwei Schrauben gelöst werden müssen und anschließend das Außenprofil mit dem angeschweißten Rundstahl einfach nach oben hin aus der einbetonierten Hülse gezogen werden kann. Einhergehend damit liegt gleichzeitig auch die Regalstütze frei.

Das vertikale Profil bzw. der Rundstahl steht hier nicht nach oben über, d.h. besitzt kein oberes Verlängerungsende, und bietet somit keinen direkten Angriffspunkt für beispielsweise ein Staplerfahrzeug.

Weitere Einzelheiten und Vorteile der Erfindung ergeben sich aus den Ansprüchen und der nachfolgenden Beschreibung, in der Ausführungsbeispiele des Gegenstandes der Erfindung näher erläutert sind. Es zeigen:
- Fig. 1: in einer schematischen Seitenansicht eine am Boden angeordnete Regalstütze einer Regalanlage, der ein als U-Profil ausgebildeter Anfahrschutz zugeordnet ist;
- Fig. 2: eine Draufsicht der Fig. 1;
- Fig. 3: in einer Seitenansicht und teilgeschnitten dargestellt ein spitzwinklig ausgebildetes U-Profil, das einer Regalstütze als Anfahrschutz zugeordnet ist; und
- Fig. 4: eine Draufsicht der Fig. 3.

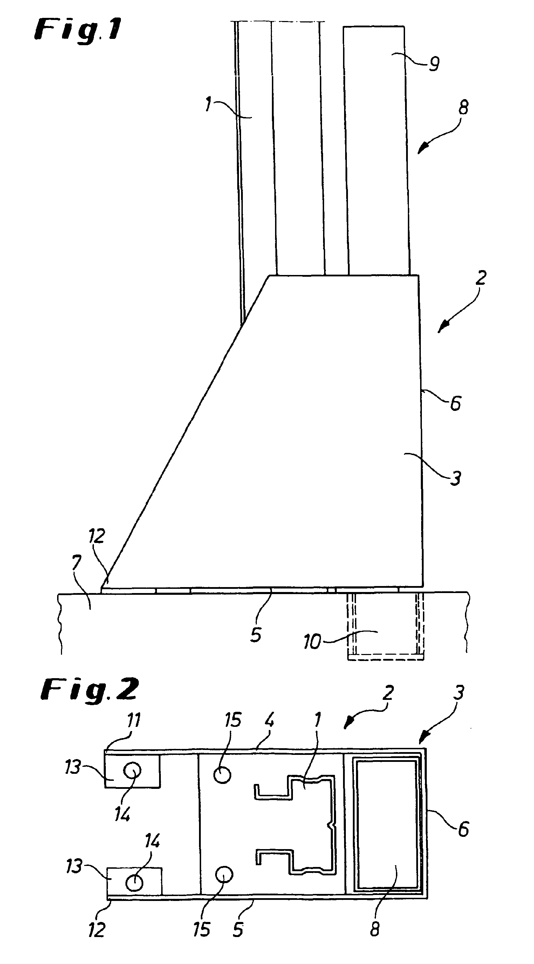

Die Fig. 1 und 2 zeigen eine Regalstütze 1 einer hier nicht näher dargestellten Regalanlage. Der Regalstütze 1 ist ein Anfahrschutz 2 vorgeschaltet, der aus einem U-förmigen Profil 3 als Außenprofil besteht, das mit seinen beiden am hinteren Ende abgeschrägten Flanschen 4, 5 und seinem Steg 6, jeweils am Untergrund 7 aufliegend, die Regalstütze 1 schürzenartig umschließt.

Der Steg 6 ist mit einem der Regalstütze 1 vorgelagerten, vertikalen Vierkantrohr 8 verschweißt, wodurch ein einstückiger und im kritischen Anprall- bzw. Aufprallbereich gezielt verstärkter Anfahrschutz 2 mit einem zwischen der Regalstütze 1 und dem Außenprofil 3 vorgesehenen weiteren Energieverzehrelement, nämlich das vertikale, hier vierkantige Rohr 8, erreicht wird.

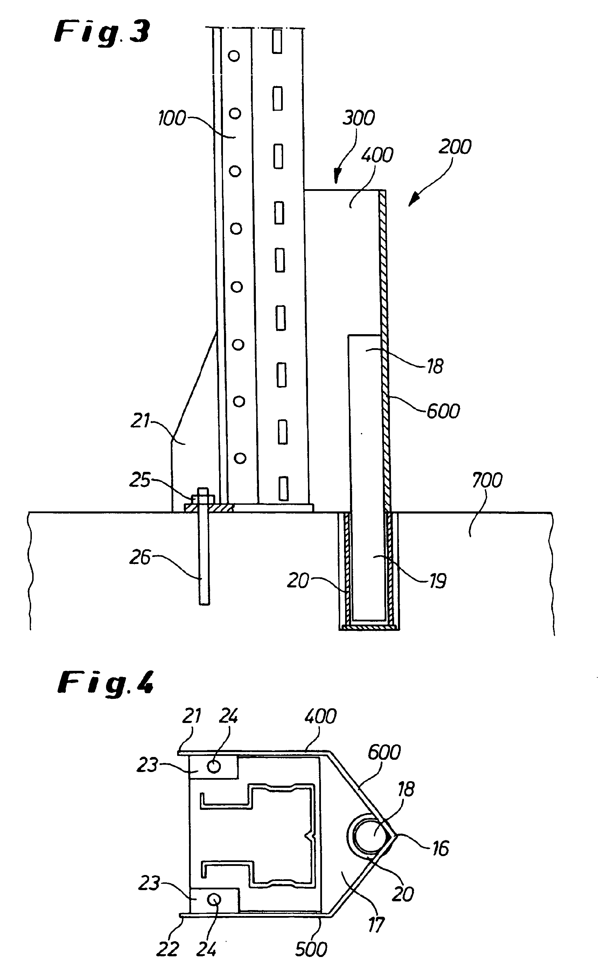

Das vertikale Vierkantrohr 8 ist sowohl nach oben hin als auch nach unten hin gegenüber dem U-förmigen Außenprofil 3 verlängert. Während das obere Verlängerungsende 9, parallel zur Regalstütze 1 verlaufend, eine weitergehende Regalstützen-Schutzbarriere in der senkrechten Ebene bereitstellt, ist das untere Verlängerungsende 10 in eine im Untergrund 7 einbetonierte Hülse 20 (vgl. Fig. 3) eingesteckt.

An den von dem vorgelagerten vertikalen Vierkantrohr 8 entfernten, hinteren Flanschenden 11, 12 des Außenprofils 3 sind innenseitig Verankerungsplatten 13 vorgesehen, die mit Bohrungen 14 zur Aufnahme von Schrauben versehen sind. Mittels zweier hier nicht dargestellter Schrauben und entsprechend im Untergrund 7 verankerter Dübel wird das U-förmige Profil 3 bewegungssicher festgelegt. Um die Regalstütze 1, die ebenfalls über Befestigungsbohrungen 15 am Boden 7 verschraubt ist, zugänglich zu machen, müssen lediglich die zwei Befestigungsschrauben des Anfahrschutzes 2 gelöst werden.

Die Fig. 3 und 4 zeigen einen alternativen Anfahrschutz 200. Der der Regalstütze 100 zugeordnete Anfahrschutz 200 besteht hier aus einem U-förmigen Profil 300 als Außenprofil, das mit seinen beiden Flanschen 400, 500 und dem Steg 600, jeweils am Untergrund 700 aufliegend, die Regalstütze 100 wiederum an drei Seiten umschließt. Der Steg 600 ist in der von der Regalstütze 100 nach vorne weg weisenden Richtung spitzwinklig bzw. V-förmig ausgebildet, wodurch bei einem Anfahren des U-Profils 300, eine nur verhältnismäßig kleine Auf- bzw. Anprallfläche touchiert wird, und zwar im Scheitelpunkt 16 seines Winkels 17, so dass in diesem Bereich die größten Kräfte aufgenommen werden können.

Weiterhin wird die Schutzwirkung des Außenprofils 300 durch einen vertikalen Rundstahl 18, optional ein Rohr oder dergleichen, verstärkt, der tangential zum Scheitelpunkt 16 des Winkels 17 an den Winkelstegen 600 angeschweißt ist. Der Rundstahl 18 verläuft in vertikaler Richtung parallel zur Regalstütze 100 und ist nur nach unten hin gegenüber dem Außenprofil 300 verlängert. Bei seiner Montage wird das untere Verlängerungsende 19 wie im Ausführungsbeispiel nach Fig. 1 in eine im Untergrund 700 einbetonierte Bodenhülse 20 eingeschoben, wodurch das Außenprofil 300 nach der Montage im Bereich des Winkels 17 bewegungssicher festgelegt ist.

Außerdem wird das Außenprofil 300 am Untergrund 700 verschraubt. Dazu sind an der Innenseite der Flanschenden 21, 22 ebenfalls wieder einander zugewandte Verankerungsplatten 23 ausgebildet, die jeweils eine Bohrung 24 zur Aufnahme einer Schraube 25 aufweisen.

Zur Verschraubung werden die bereits im Untergrund 700 vorhandenen Dübel 26 der Regalstütze 100 mit benutzt. Das heißt, das Außenprofil 300 kann zusammen mit der Regalstütze 100 verschraubt werden. Somit entfällt bei der Nachrüstung des Anfahrschutzes 300 die Einbringung zusätzlicher Bohrungen in den Untergrund 700.

### Bezugszeichenliste:

- 1: Regalstütze
- 2: Anfahrschutz
- 3: U-förmiges Profil / Außenprofil
- 4: Flansch (Profil 3)
- 5: Flansch (Profil 3)
- 6: Steg (Profil 3)
- 7: Untergrund (Boden)
- 8: Vierkantrohr
- 9: oberes Verlängerungsende
- 10: unteres Verlängerungsende
- 11: Flanschende (Profil 3)
- 12: Flanschende (Profil 3)
- 13: Verankerungsplatten (Profil 3)
- 14: Bohrung (Verankerungsplatten 13)
- 15: Befestigungsbohrung (Untergrund)
- 16: Scheitelpunkt (Winkel)
- 17: Winkel
- 18: Rundstahl
- 19: unteres Verlängerungsende (Rundstahl)
- 20: Hülse
- 21: Flanschende (Profil 300)
- 22: Flanschende (Profil 300)
- 23: Verankerungsplatte (Profil 300)
- 24: Bohrung (Verankerungsplatten 23)
- 25: Schraube
- 26: Dübel

- 100: Regalstütze
- 200: Anfahrschutz
- 300: U-förmiges Profil / Außenprofil
- 400: Flansch (Profil 300)
- 500: Flansch (Profil 300)
- 600: Steg (Profil 300)
- 700: Untergrund

## Patentansprüche

1. Anfahrschutz (2, 200) für Eck- bzw. Regalstützen (1, 100) von Regalanlagen, umfassend bodenseitig angeordnete, die Regalstützen umschließende, U-förmige Außenprofile (3, 300), wobei
dem Außenprofil (3, 300) an seiner Innenseite (6, 600) ein der Regalstütze (1, 100) vorgelagertes, vertikales Profil (8, 18) zugeordnet ist,
**dadurch gekennzeichnet,**
**dass** das vertikale Profil (8, 18) zumindest nach unten hin gegenüber dem Außenprofil (3, 300) verlängert ist.

2. Anfahrschutz nach Anspruch 1,
**dadurch gekennzeichnet,**
**dass** das untere Verlängerungsende (10; 19) des vertikalen Profils (8) in eine im Untergrund (7) einbetonierte Hülse (20) eintauchbar ausgestattet ist.

3. Anfahrschutz nach einem der Ansprüche 1 oder 2,
**dadurch gekennzeichnet,**
**dass** das Außenprofil (3) an den Innenseiten seiner Flanschenden (11, 12; 21, 22) miteinander zugewandten, jeweils eine Bohrung (14; 24) aufweisenden Verankerungsplatten (13; 23) ausgebildet ist.

4. Anfahrschutz nach Anspruch 1,
**dadurch gekennzeichnet,**
**dass** der Steg (600) des Außenprofils (300) von der Regalstütze (100) weg nach vorne spitzwinklig zuläuft und angrenzend zum Scheitelpunkt (16) des Winkels (17) beidseitig tangential an dem vertikalen Profil (18) abgestützt ist.

5. Anfahrschutz nach Anspruch 4,
**dadurch gekennzeichnet,**
**dass** das vertikale Profil (18) ein Rundstahl ist, der nach unten hin gegenüber dem Außenprofil (300) verlängert ist, wobei das Verlängerungsende (19) in einer im Untergrund (700) einbetonierten Hülse (20) angeordnet ist.

## Claims

1. A collision guard (2, 200) for corner or shelf supports (1, 100), respectively, of shelf systems, comprising U-shaped outer profiles (3, 300), which are arranged on the bottom side and which surround the shelf supports, wherein
a vertical profile (8, 18), which is located upstream of the shelf support (1, 100), is assigned to the outer profile (3, 300) on its inner side (6, 600),
**characterized in**
**that** the vertical profile (8, 18) is extended at least downwards relative to the outer profile (3, 300).

2. The collision guard according to claim 1,
**characterized in**
**that** the lower extension end (10; 19) of the vertical profile (8) is equipped so as to be capable of being immersed into a sleeve (20), which is embedded in concrete in the ground (7).

3. The collision guard according to one of claims 1 or 2,
**characterized in**
**that**, on the inner sides of its flange ends (11, 12; 21, 22), the outer profile (3) is embodied with anchoring slabs (13; 23), which face one another and which in each case encompass a bore (14; 24).

4. The collision guard according to claim 1,
**characterized in**
**that** the bar (600) of the outer profile (300) extends forwards in an acute-angled manner, away from the shelf support (100), and is supported tangentially on both sides of the vertical profile (18) so as to adjoin the vertex (16) of the angle (17).

5. The collision guard according to claim 4,
**characterized in**
**that** the vertical profile (18) is a round steel, which is extended downwardly relative to the outer profile (300), wherein the extension end (19) is arranged in a sleeve (20), which is embedded in concrete in the ground (700).

## Revendications

1. Protection pied d'échelle (2, 200) pour supports d'équerres ou de rayonnages (1, 100) d'installations à rayonnages, comprenant des profilés extérieurs (3, 300) en forme de U disposés au sol et entourant les supports de rayonnages,
étant associé au profilé extérieur (3, 300), sur sa face intérieure (6, 600), un profilé vertical (8, 18) placé en amont du support de rayonnages (1, 100),
**caractérisée en ce que**
le profilé vertical (8, 18) est rallongé du moins vers le bas par rapport au profilé extérieur (3, 300).

2. Protection pied d'échelle selon la revendication 1,
**caractérisée en ce que**
l'extrémité rallongée inférieure (10 ; 19) du profilé vertical (8) est équipée de manière à pouvoir être plongée dans un manchon (20) bétonné dans le soubassement (7).

3. Protection pied d'échelle selon une des revendications 1 ou 2,
**caractérisée en ce que**
le profilé extérieur (3) est réalisé avec des plaques d'ancrage (13 ; 23) tournées les unes vers les autres au niveau des faces intérieures de ses extrémités à brides (11, 12 ; 21, 22) et présentant respectivement un alésage (14 ; 24).

4. Protection pied d'échelle selon la revendication 1,
**caractérisée en ce que**
la traverse (600) du profilé extérieur (300) s'étend suivant un angle aigu depuis le support de rayonnages (100) vers l'avant et s'appuie tangentiellement des deux côtés sur le profilé vertical (18) à la limite du point sommital (16) de l'équerre (17).

5. Protection pied d'échelle selon la revendication 4,
**caractérisée en ce que**
le profilé vertical (18) est une barre d'acier rond qui est rallongée vers le bas par rapport au profilé extérieur (300), l'extrémité rallongée (19) étant disposée dans un manchon (20) bétonné dans le soubassement (700).
